# EUROPEAN PATENT APPLICATION

(11) **EP 4 660 261 A1**
(43) Date of publication of application: **10.12.2025**
(21) Application number: 24763899.2
(22) Date of filing: 27.02.2024
(51) Int. Cl.: C09D 11/30, B41J 2/01, B41J 2/165, B41M 5/00

(54) **AQUEOUS INK, INK EJECTION DEVICE, IMAGE RECORDING DEVICE AND PRINTING METHOD**

(30) Priority: 02.03.2023 JP 2023031590; 31.10.2023 JP 2023186302
(71) Applicant: BROTHER KOGYO KABUSHIKI KAISHA, Nagoya-shi, Aichi 467-8561 (JP)
(72) Inventor: KURIKI Hirofumi, Nagoya-shi, Aichi 467-8562 (JP); NAGANO Taro, Nagoya-shi, Aichi 467-8562 (JP)
(74) Representative: Prüfer & Partner mbB Patentanwälte · Rechtsanwälte
(86) International application number: PCT/JP2024/007006
(87) International publication number: WO 2024/181420

(57) **Abstract**

An aqueous ink retaining an ink ejection property, ruggedness, and a decapping property without violating a VOC regulation standard, is provided. An aqueous ink contains water, a solvent group A having a weight change amount of more than 0.01 g when 1.5 g ± 0.1 g of the solvent group A is placed in an upwardly opened aluminum foil box of 40 mm × 40 mm × 10 mm and heated at a temperature of 100°C ± 5°C for 30 minutes indoors at a room temperature of 25°C and a humidity of 65%, a thickener, and a binder polymer. A weight percent of the solvent group A in the total amount of the aqueous ink is 25.0 wt% to 30.0 wt%. A weight percent of the thickener in the total amount of the aqueous ink is 10.1% or more. A viscosity of the aqueous ink is 10 mPa·s to 14 mPa·s.

## Description

### TECHNICAL FIELD

The present invention relates to an aqueous ink, an ink ejection device, an image recording device, and a printing method to be used in an ink jet recording device.

### BACKGROUND ART

As an aqueous ink to be used in an inkjet recording device, an aqueous ink for ink jet recording of Patent Literature 1 is known. The aqueous ink for ink jet recording of Patent Literature 1 contains water, a water-soluble organic solvent, a pH adjusting agent, a viscosity adjusting agent, a surface tension adjusting agent, an antifungal agent, and the like. In Patent Literature 1, a viscosity of the ink is adjusted to be low so that the ink is easily ejected from a nozzle of an ink jet head.

### CITATION LIST

### PATENT LITERATURE

Patent Literature 1: JP2020-196779A

### SUMMARY OF INVENTION

### TECHNICAL PROBLEM

The above aqueous ink for ink jet recording has an excellent ink ejection property, but is difficult to provide a sharp image quality because the viscosity of the ink is low. That is, ruggedness is low. One option to improve the ruggedness is to increase the viscosity of the aqueous ink. However, this case may cause not only deterioration of the ink ejection property, but also problems that a VOC regulation standard may be violated, the ink attached to the nozzle is quickly dried, and the nozzle is likely to be clogged, that is, a so-called decapping property is deteriorated, depending on a type of the solvent and a solvent ratio, because a large amount of solvent is used.

An object of the present invention is to provide an aqueous ink, an ink ejection device, an image recording device, and a printing method that retain an ink ejection property, ruggedness, and a decapping property without violating a VOC regulation standard.

### SOLUTION TO PROBLEM

(1) An aqueous ink according to the present invention includes water, a solvent group A having a weight change amount of more than 0.01 g when 1.5 g ± 0.1 g of the solvent group A is placed in an upwardly opened aluminum foil box of 40 mm × 40 mm × 10 mm and heated at a temperature of 100°C ± 5°C for 30 minutes indoors at a room temperature of 25°C and a humidity of 65%, a thickener, and a binder polymer. A weight percent of the solvent group A in a total amount of the aqueous ink is 25.0 wt% to 30.0 wt%. A weight percent of the thickener in the total amount of the aqueous ink is 10.1 wt% or more. A viscosity is 10 mPa·s to 14 mPa·s.
   The weight percent of the solvent group A in the total amount of the aqueous ink is 30.0 wt% or less, and thus the aqueous ink does not violate a VOC regulation standard. The weight percent of the solvent group A in the total amount of the aqueous ink is 25.0 wt% or more, and thus, a weight percent of the water which is more likely to evaporate than the solvent group A is reduced. This suppresses quick drying of the aqueous ink attached to a nozzle to make the aqueous ink hard to solidify. Accordingly, clogging of the nozzle due to the solidified ink is suppressed. That is, a decapping property is retained. The viscosity of the aqueous ink is adjusted to 10 mPa·s or more by the thickener, and thus, an image formed by the ink is hard to become unclear. Therefore, ruggedness is retained. The viscosity of the aqueous ink is adjusted to 14 mPa·s or less by the thickener, and this reduces difficulty in ejecting the ink from the nozzle. Therefore, an ink ejection property is retained.
(2) The thickener may contain a solvent group B having a weight change amount of 0.01 g or less when 1.5 g ± 0.1 g of the solvent group B is heated at a temperature of 100°C ± 5°C for 30 minutes. A weight percent of the solvent group B in the total amount of the aqueous ink may be 25.0 wt% or less.
   The weight percent of the solvent group B which is harder to evaporate than the solvent group A is limited to 25.0 wt% or less, and this improves a drying property of the aqueous ink.
(3) The weight percent of the solvent group B in the total amount of the aqueous ink may be 5.0 wt% or less.
   The drying property of the aqueous ink is further improved.
(4) The binder polymer may be a polymer in which a low viscosity binder polymer dispersion liquid containing the polymer has a viscosity of 10 mPa·s to less than 100 mPa·s when the polymer is added to a low viscosity binder polymer dispersion medium so as to be 38.0 wt% in the low viscosity binder polymer dispersion liquid.
   A rubbing resistance of a film formed by the binder polymer is improved.
(5) A weight percent of the binder polymer in the total amount of the aqueous ink may be 5.0 wt% or less.
   Formation of a film on a nozzle surface or in the nozzle when the aqueous ink is dried is reduced, and thus an ejection failure of the aqueous ink is reduced.
(6) The weight percent of the binder polymer in the total amount of the aqueous ink may be 3.0 wt% or less.
   Formation of a film on a nozzle surface or in the nozzle when the aqueous ink is dried is reduced, and thus an ejection failure of the aqueous ink is reduced.
(7) The binder polymer may be an acrylic polymer.
   The rubbing resistance and stability of the film formed by the binder polymer are further improved.
(8) The thickener may contain a high viscosity binder polymer dispersion liquid in which the binder polymer is dispersed. The high viscosity binder polymer dispersion liquid may have a viscosity of 100 mPa·s or more and less than 5000 mPa·s when the binder polymer is added to a high viscosity binder polymer dispersion medium such that the binder polymer is 38.0 wt% in the high viscosity binder polymer dispersion liquid.
   The rubbing resistance of the film formed by the binder polymer is further improved.
(9) The weight percent of the thickener in the total amount of the aqueous ink may be 28.0 wt% or less.
(10) An evaporation rate may be 70% or more after 5 g of the aqueous ink is placed in an upwardly opened container having a diameter of 60 mm and heated at 100°C for 4 hours indoors at a room temperature of 25°C and a humidity of 65%.
   The drying property of the aqueous ink is high.
(11) An ink ejection device according to the present invention includes a head including a nozzle configured to eject the aqueous ink, and a heater configured to heat at least one of a non-absorbing medium to which the aqueous ink ejected from the nozzle is attached and the aqueous ink attached to the non-absorbing medium.
   The aqueous ink attached to the non-absorbing medium is easily dried.
(12) A heating temperature by the heater may be 60°C or higher.
   The aqueous ink ejected onto the non-absorbing medium is more easily dried.
(13) The nozzle may eject the ink in a vertical direction.
   In order to retain ruggedness of the aqueous ink, the viscosity of the aqueous ink is increased. Thus, even when a distance between the head and the non-absorbing medium is increased, the aqueous ink is less likely to spread on the non-absorbing medium, so that an image formed by the aqueous ink is less likely to become unclear. Therefore, a size restriction on a printing target is easily relaxed by increasing the distance between the head and the non-absorbing medium.
(14) The nozzle may eject the ink in a horizontal direction.
   In order to ensure the ruggedness of the aqueous ink, the viscosity of the aqueous ink is increased. Thus, even when the aqueous ink is ejected in the horizontal direction, dripping of the aqueous ink attached to the non-absorbing medium is reduced.
(15) The ink ejection device may further include a cap configured to abut against the head and cover the nozzle, a suction pump configured to suction an ink in the cap, and a controller. The controller may periodically performing a purge process of driving the suction pump in a state where the cap covers the nozzle during an image recording process of ejecting the ink onto the non-absorbing medium.
   Clogging of the nozzle by a foreign matter is more reliably reduced.
(16) An image recording device according to the present invention includes the ink ejection device and a conveyance device configured to convey a non-absorbing medium in a conveyance direction.
   An image is suitably recorded on the non-absorbing medium.
(17) A printing method according to the present invention includes a first step of ejecting the aqueous ink from a nozzle, and a second step of heating, by a heater, at least one of a non-absorbing medium to which the aqueous ink ejected from the nozzle is attached and the aqueous ink attached to the non-absorbing medium.
   The aqueous ink attached to the non-absorbing medium is easily dried.
(18) In the second step, a temperature at which the heater heats at least one of the non-absorbing medium and the aqueous ink may be 60°C or higher.
   The aqueous ink attached to the non-absorbing medium is more easily dried.
(19) In the first step, the nozzle may eject the aqueous ink in a vertical direction.
   In order to ensure ruggedness of the aqueous ink, a viscosity of the aqueous ink is increased. Thus, even when a distance between the head and the non-absorbing medium is increased, an image formed by the aqueous ink is less likely to become unclear. Therefore, a size restriction on a printing target is easily relaxed by increasing the distance between the head and the non-absorbing medium.
(20) In the first step, the nozzle may eject the aqueous ink in a horizontal direction.
   In order to ensure the ruggedness of the aqueous ink, the viscosity of the aqueous ink is increased. Thus, even when the aqueous ink is ejected in the horizontal direction, dripping of the aqueous ink attached to the non-absorbing medium is reduced.
(21) The printing method may further include a third step of periodically performing, by a controller, a purge process of driving a suction pump configured to suction an ink in a cap in a state where the cap covers the nozzle during an image recording process of recording an image on the non-absorbing medium by ejecting the aqueous ink from the nozzle.
   Clogging of the nozzle by a foreign matter is more reliably reduced.
(22) The printing method may further include a fourth step of conveying, by a conveyance device, the non-absorbing medium to a position where the non-absorbing medium faces a head before the first step.
   An image is suitably recorded on the non-absorbing medium.

### ADVANTAGEOUS EFFECTS OF INVENTION

The present invention allows for retaining the ink ejection property, the ruggedness, and the decapping property without violating the VOC regulation standard.

### BRIEF DESCRIPTION OF DRAWINGS

[FIG. 1] FIG. 1 is an external perspective view of an image recording device 100 according to an embodiment of the present invention.
[FIG. 2] FIG. 2 is a cross-sectional view taken along a line II-II in FIG. 1.
[FIG. 3] FIG. 3 is a schematic diagram showing an ink circuit 113.
[FIG. 4] FIG. 4 is a block diagram showing a controller 130.

### DESCRIPTION OF EMBODIMENTS

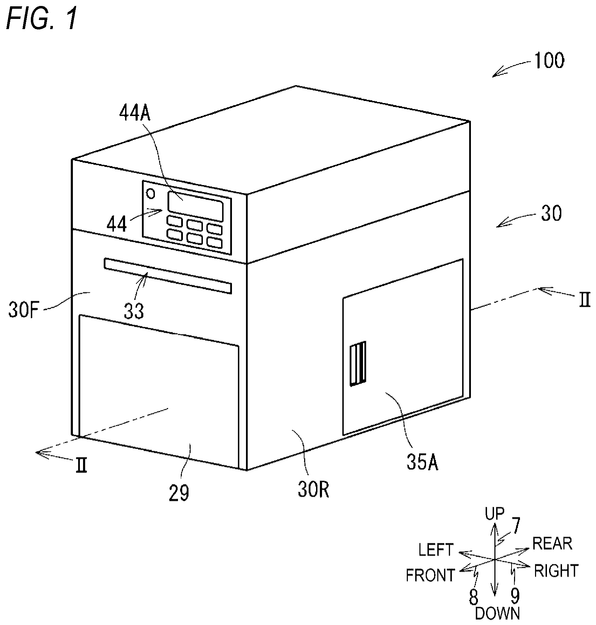

Hereinafter, a preferred embodiment of the present invention will be described. The present embodiment is merely one embodiment of the present invention, and it is needless to say that the embodiment can be modified without changing the gist of the present invention. In addition, in the following description, advancement from a start point to an end point of an arrow is expressed as an orientation, and movement on a line connecting the start point and the end point of the arrow is expressed as a direction. In the following description, an up-down direction 7 is defined based on a state in which an image recording device 100 is installed to be usable (in a state shown in FIG. 1), a front-rear direction 8 is defined such that a side where a discharge port 33 is provided is taken as a front side (front surface), and a left-right direction 9 is defined from the view of the front side (front surface) of the image recording device 100.

### [Appearance Configuration of Image Recording Device 100]

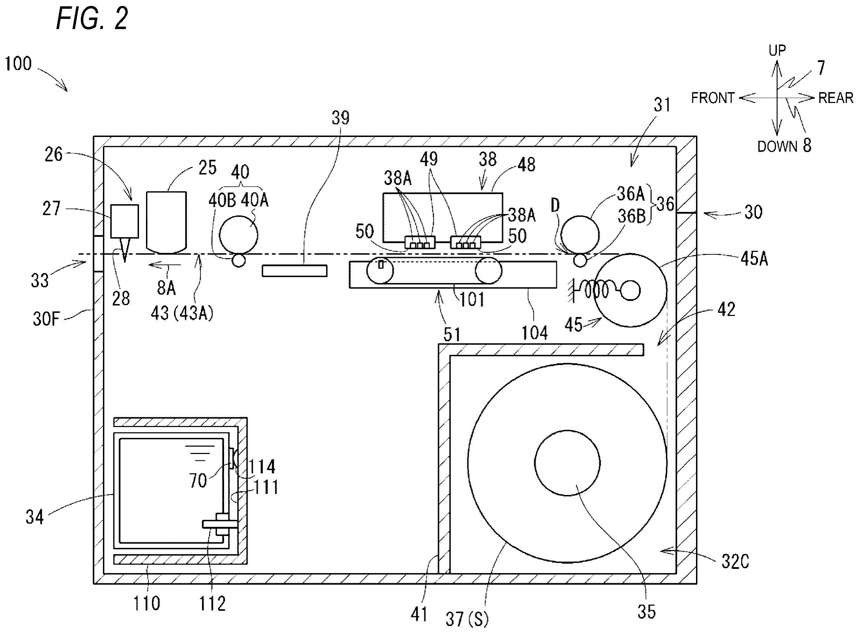

The image recording device 100 (example of an ink ejection device) shown in FIG. 1 records an image on a sheet S forming a roll body 37 (see FIG. 2) using an ink jet recording method.

As shown in FIG. 1, the image recording device 100 includes a housing 30. The housing 30 has a substantially rectangular parallelepiped shape as a whole. A frame for supporting each member may be appropriately provided inside the housing 30.

The long slit-shaped discharge port 33 that is long in the left-right direction 9 is formed in a front surface 30F of the housing 30. The image-recorded sheet S (see FIG. 2) is discharged from the discharge port 33. An operation panel 44 is provided on the front surface 30F. A user performs an input on the operation panel 44 to operate the image recording device 100 or confirm various settings.

A right cover 35A is located on a right surface 30R of the housing 30. By opening and closing the right cover 35A, a holder 35 and the like (see FIG. 2) located in a sheet storage space 32C are exposed or covered.

A front cover 29 is located on the front surface 30F of the housing 30. The front cover 29 is openable around a pivot shaft (not shown) extending in the left-right direction 9 in the vicinity of a lower end of the front cover 29 such that an upper end side of the front cover 29 falls forward. By opening and closing the front cover 29, a cartridge mounting portion 110 and the like (see FIG. 2) located in an internal space 31 of the housing 30 are exposed or covered.

### [Internal Configuration of Image Recording Device 100]

As shown in FIG. 2, the holder 35, a tensioner 45, a conveyance roller pair 36, a conveyance roller pair 40, a head 38, a platen 51, a heater 39, a CIS 25, a cutter unit 26, the cartridge mounting portion 110, and the like are arranged in the internal space 31 of the housing 30. Although not shown in FIG. 2, a fixing unit, an image sensor, a maintenance mechanism, and the like may be located in the internal space 31.

A partition wall 41 is provided in the internal space 31. The partition wall 41 partitions a rear lower portion of the internal space 31 to define the sheet storage space 32C. The sheet storage space 32C is surrounded by the partition wall 41 and a lower housing 32 and isolated from the head 38 and the like.

The roll body 37 is stored in the sheet storage space 32C. The roll body 37 includes a core tube and an elongated sheet S. The sheet S is wound around the core tube in a roll shape in a circumferential direction of a shaft core of the core tube. The sheet S is a non-absorbing medium having a surface with low water absorbability. Specifically, the sheet S refers to a sheet having a water absorption amount of 10 mL/m2 or less from the start of contact to 30 msec 1/2 in a Bristow method. In addition, the term "non-absorbing" may refer to a water absorption rate of less than 0.5% in 24 hours measured in accordance with ASTMD570. More specifically, the term "non-absorbing" may refer to the water absorption rate of less than 0.2%. A unit "%" of the water absorption rate is based on mass. Examples of a material of the sheet S include plastics (such as a polypropylene, a polyethylene, a polyethylene terephthalate, a polyvinyl chloride resin, and a polycarbonate).

The tensioner 45 is located above the partition wall 41 in a rear portion of the internal space 31. The tensioner 45 has an outer circumferential surface 45A facing an outside of the lower housing 32. The outer circumferential surface 45A has a size equal to or larger than a maximum width of the sheet in the left-right direction 9, and has a shape that is symmetrical with respect to a sheet passing center (center of the sheet S in the left-right direction 9). An upper end of the outer circumferential surface 45A is located at substantially the same up-down position as a nip position of the conveyance roller pair 36 in the up-down direction 7.

The sheet S pulled out from the roll body 37 is hung on and abuts against the outer circumferential surface 45A. The sheet S is curved forward along the outer circumferential surface 45A, extends in a conveyance orientation 8A, and is guided to the conveyance roller pair 36. The conveyance orientation 8A is a forward orientation along the front-rear direction 8. The tensioner 45 applies tension to the sheet S using a well-known method.

The conveyance roller pair 36 is located in front of the tensioner 45. The conveyance roller pair 36 includes a conveyance roller 36A and a pinch roller 36B. The conveyance roller 36A and the pinch roller 36B abut against each other at substantially the same up-down position as the upper end of the outer circumferential surface 45A. The conveyance roller pair 36 is an example of a conveyance device.

A conveyance roller pair 40 is located in front of the conveyance roller pair 36. The conveyance roller pair 40 includes a conveyance roller 40A and a pinch roller 40B. The conveyance roller 40A and the pinch roller 40B abut against each other at substantially the same up-down position as the upper end of the outer circumferential surface 45A.

The conveyance rollers 36A and 40A are rotated by a driving force transmitted from a motor (not shown). The conveyance roller pair 36 rotates while nipping the sheet S extending from the tensioner 45 in the conveyance orientation 8A, thereby feeding the sheet S in the conveyance orientation 8A along a conveyance surface 43A. The conveyance roller pair 40 rotates while nipping the sheet S fed from the conveyance roller pair 36, thereby feeding the sheet S in the conveyance orientation 8A. The sheet S is pulled out from the sheet storage space 32C toward the tensioner 45 through a gap 42 by the rotation of the conveyance roller pairs 36 and 40.

As shown in FIG. 2, a conveyance path 43 extends from the upper end of the outer circumferential surface 45A to the discharge port 33 in the internal space 31. The conveyance path 43 extends substantially linearly along the conveyance orientation 8A, and is a space through which the sheet S can pass. In FIG. 2, the conveyance surface 43A is indicated by a two-dot chain line indicating the conveyance path 43. The conveyance path 43 is defined by guide members (not shown) which are located apart from each other in the up-down direction 7, the head 38 and the platen 51 which are located apart from each other in the up-down direction 7, and the like.

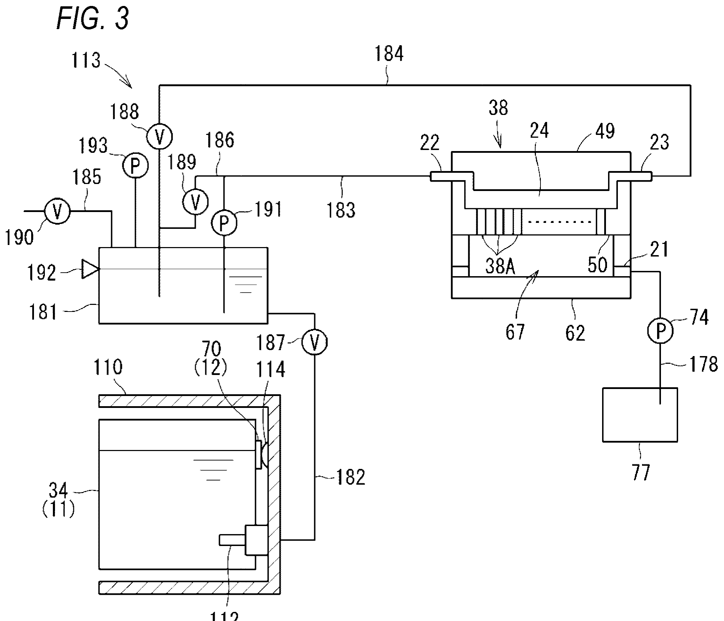

The head 38 is located above the conveyance path 43 and located downstream from the conveyance roller pair 36 in the conveyance orientation 8A. The head 38 includes a frame 48 and an ejection module 49 including a plurality of nozzles 38A. The ejection module 49 is supported by the frame 48. The ejection module 49 includes an inflow port 22 and an outflow port 23. The inflow port 22 is connected to a manifold 24, and the outflow port 23 is connected to a manifold 24. The manifold 24 is connected to the plurality of nozzles 38A (see FIG. 3). The plurality of nozzles 38A ejects an aqueous ink supplied from an ink sub-tank 181 (see FIG. 3) downward to the sheet S supported by a conveyance belt 101. Accordingly, an image is recorded on the sheet S.

The platen 51 is located below the conveyance path 43 and located downstream from the conveyance roller pair 36 in the conveyance orientation 8A. The platen 51 is located below the head 38 and faces the head 38. The platen 51 includes the conveyance belt 101 and a support portion 104. The conveyance belt 101 supports the sheet S that is conveyed in the conveyance orientation 8A by the conveyance roller pair 36 and is located directly below the head 38. The conveyance belt 101 conveys the supported sheet S in the conveyance orientation 8A.

The heater 39 is located below the conveyance path 43, and is located downstream from the head 38 in the conveyance orientation 8A and upstream from the conveyance roller pair 40 in the conveyance orientation 8A. The heater 39 heats the sheet S conveyed through the conveyance path 43. The heater 39 is an example of a heater.

The CIS 25 is located above the conveyance path 43 and located downstream from the conveyance roller pair 40 in the conveyance orientation 8A. The CIS 25 reads the image on a printing surface of the sheet.

The cutter unit 26 is located above the conveyance path 43 and located downstream from the CIS 25 in the conveyance orientation 8A. The cutter unit 26 includes a cutter 28 mounted on a cutter carriage 27. As the cutter 28 moves, the sheet S on the conveyance path 43 is cut along the left-right direction 9.

The cartridge mounting portion 110 is located in the vicinity of a front end and a lower end of the housing 30, and has a box shape that is openable toward the front. An ink cartridge 34 is inserted rearward into the cartridge mounting portion 110. An ink needle 112 extending forward is located on a rearward end surface 111 of the cartridge mounting portion 110. The ink needle 112 communicates with the ink sub-tank 181 through a flow path 182 (see FIG. 3).

The contact point 114 is located on the end surface 111. The contact point 114 is electrically connected to an IC substrate 70 of the ink cartridge 34 in a state where the ink cartridge 34 is mounted on the cartridge mounting portion 110. The controller 130 is accessible to a storage area of the IC substrate 70 through the contact point 114. The contact point 114 is electrically connected to an IC substrate 12 of a preservation liquid cartridge 11 in a state where the preservation liquid cartridge 11 is mounted on the cartridge mounting portion 110 (see FIG. 3). The controller 130 is accessible to a storage area of the IC substrate 12 through the contact point 114.

The ink cartridge 34 stores the aqueous ink. When the aqueous ink is consumed, the ink cartridge 34 is removed from the cartridge mounting portion 110 and replaced with a new ink cartridge 34 storing an aqueous ink. The IC substrate 70 is located on a rear surface of the ink cartridge 34. The IC substrate 70 stores identification information indicating the ink cartridge 34 in the storage area.

Instead of the ink cartridge 34, the preservation liquid cartridge 11 (second cartridge) is inserted into the cartridge mounting portion 110. The preservation liquid cartridge 11 stores a preservation liquid. When the image recording device 100 is stored for a long time without being used, instead of the ink cartridge 34, the preservation liquid cartridge 11 is mounted on the cartridge mounting portion 110. The IC substrate 12 is located on a rear surface of the preservation liquid cartridge 11. The IC substrate 12 stores identification information indicating the preservation liquid cartridge 11 in the storage area.

### [Ink Circuit 113]

As shown in FIG. 3, the cartridge mounting portion 110 and the ejection module 49 of the head 38 are connected by an ink circuit 113. The ink circuit 113 includes the ink sub-tank 181, flow paths 182, 183, and 184, an atmospheric flow path 185, a replenishing valve 187, an atmospheric release valve 190, a positive pressure pump 191, and a liquid level sensor 192.

The ink sub-tank 181 is located above the cartridge mounting portion 110 in the internal space 31 of the housing 30. The ink sub-tank 181 stores the aqueous ink in an internal space thereof. The internal space of the ink sub-tank 181 communicates with the ink needle 112 of the cartridge mounting portion 110 through the flow path 182. In a state where the ink cartridge 34 is mounted on the cartridge mounting portion 110, the ink stored in the ink cartridge 34 can flow into the ink sub-tank 181 through the flow path 182. In a state where the preservation liquid cartridge 11 is mounted on the cartridge mounting portion 110, the preservation liquid stored in the preservation liquid cartridge 11 can flow into the ink sub-tank 181 through the flow path 182. The replenishing valve 187 is located in the flow path 182. The replenishing valve 187 is controlled by the controller 130 to open and close the flow path 182.

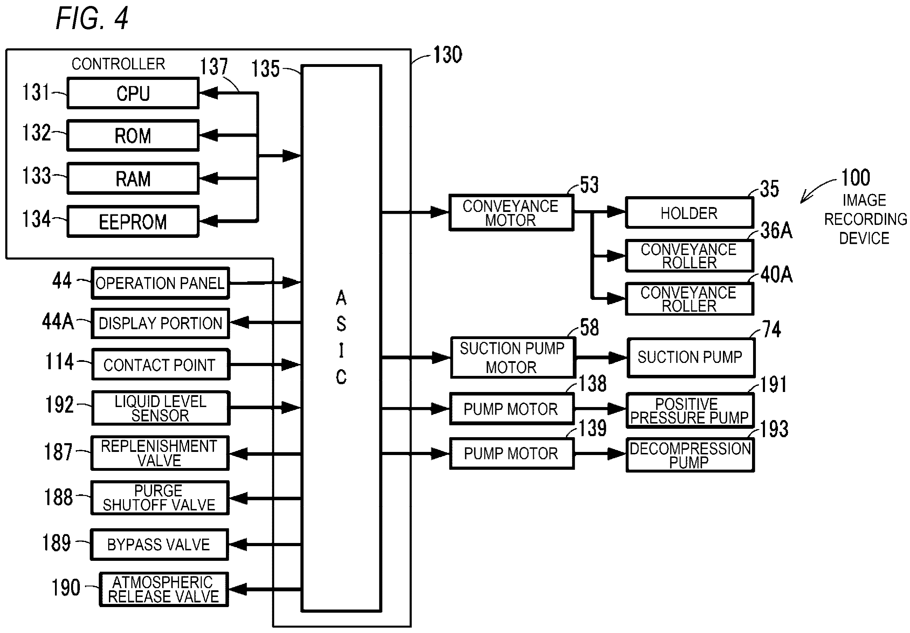

The internal space of the ink sub-tank 181 and the ejection module 49 communicate with each other through the flow paths 183 and 184. The flow path 183 is connected to the inflow port 22 of the ejection module 49. The flow path 184 is connected to the outflow port 23 of the ejection module 49. The aqueous ink or the preservation liquid stored in the internal space of the ink sub-tank 181 can be supplied to the ejection module 49 through the flow path 183. The positive pressure pump 191 is located in the flow path 183. The positive pressure pump 191 is operated by the controller 130 controlling driving of a pump motor 138 (see FIG. 4). A purge shutoff valve 188 is located in the flow path 184. The purge shutoff valve 188 is controlled by the controller 130 to open and close the flow path 184.

The positive pressure pump 191 in the flow path 183 is connected to the inflow port 22 by a bypass flow path 186, and the purge shutoff valve 188 in the flow path 184 is connected to the ink sub-tank 181 by the bypass flow path 186. A bypass valve 189 is located in the bypass flow path 186. The bypass valve 189 is controlled by the controller 130 to open and close the bypass flow path 186.

The internal space of the ink sub-tank 181 communicates with the outside through the atmospheric flow path 185. The atmospheric release valve 190 is located in the atmospheric flow path 185. The atmospheric release valve 190 is controlled by the controller 130 to open and close the atmospheric flow path 185.

The liquid level sensor 192 is located at the ink sub-tank 181. The liquid level sensor 192 detects the presence or absence of the aqueous ink at a replenishment liquid level height of the internal space of the ink sub-tank 181. The liquid level sensor 192 outputs a detection signal to the controller 130. The liquid level sensor 192 outputs an ON signal as a detection signal when the aqueous ink is detected, and outputs an OFF signal as a detection signal when the aqueous ink is not detected. The controller 130 determines whether a liquid level in the internal space of the ink sub-tank 181 reaches the replenishment liquid level height, based on the detection signal output from the liquid level sensor 192.

A decompression pump 193 is connected to the ink sub-tank 181. The decompression pump 193 depressurizes the internal space of the ink sub-tank 181 by discharging a gas in the internal space of the ink sub-tank 181 to the outside.

As shown in FIG. 3, caps 62 are located below each ejection module 49. In FIG. 3, only one ejection module 49 is shown. The cap 62 is made of an elastic body such as rubber or silicon. The cap 62 has a box shape with an open top. The cap 62 includes a discharge port 21 through which the aqueous ink or the like flows out from an internal space 67 of the cap 62. The discharge port 21 is connected to a waste liquid tank 77 through a flow path 178. A suction pump 74 is provided in the flow path 178. The suction pump 74 is driven by a suction pump motor 58 (see FIG. 4).

### [Controller 130]

As shown in FIG. 4, the controller 130 includes a CPU 131, a ROM 132, a RAM 133, an EEPROM 134, and an ASIC 135, which are connected by an internal bus 137. The ROM 132 stores a program and the like for controlling various operations of the CPU 131. The RAM 133 is used as a storage area for temporarily storing data, signals, and the like to be used when the CPU 131 executes the program, or is used as a work area for data processing. The EEPROM 134 stores settings and flags which are to be retained even after a power source is turned off, aqueous ink supply date and time, the number of times of supply and discharge corresponding to an elapsed time, and the like. The number of times of supply and discharge is set in advance such that the number of times of supply and discharge increases as the elapsed time increases in units of time, for example.

A conveyance motor 53, the suction pump motor 58, and pump motors 138 and 139 are connected to the ASIC 135. The replenishing valve 187, the purge shutoff valve 188, and the atmospheric release valve 190 are connected to the ASIC 135. Each valve is connected to the ASIC 135 via a drive circuit for driving the valve.

The ASIC 135 generates a drive signal for rotating each motor, and controls the motor based on the drive signal. The motor rotates forward or backward according to the drive signal from the ASIC 135. The controller 130 controls driving of the conveyance motor 53 to rotate the holder 35, the conveyance roller 36A, and the conveyance roller 40A. The controller 130 controls the driving of the suction pump motor 58 to drive the suction pump 74. The controller 130 controls driving of the pump motor 138 to drive the positive pressure pump 191. The controller 130 controls driving of the pump motor 139 to drive the decompression pump 193.

The operation panel 44, a display portion 44A, the contact point 114, the liquid level sensor 192, and a piezoelectric element (not shown) are connected to the ASIC 35. The operation panel 44 outputs an operation signal corresponding to an operation of the user to the controller 130. The operation panel 44 may include, for example, a push button or a touch sensor superimposed on a display. The controller 130 performs reading or writing from or to the storage area of the IC substrate 70 of the ink cartridge 34 or the IC substrate 12 of the preservation liquid cartridge 11 through the contact point 114. The controller 130 receives the detection signal from the liquid level sensor 192. The piezoelectric element operates by being supplied with power from the controller 130 via a drive circuit (not shown). The controller 130 controls the power supply to the piezoelectric element, and causes ink droplets to be selectively ejected from the plurality of nozzles 38A.

### [Aqueous Ink]

Hereinafter, details of the aqueous ink will be described. The aqueous ink contains water, a solvent group A, a binder polymer, a thickener, a coloring material, and a surfactant. In the aqueous ink, the solvent group A, the binder polymer, the thickener, the coloring material, and the surfactant are dissolved or dispersed in water. The aqueous ink has a viscosity in a range of 10 mPa·s to 14 mPa·s. The above range includes 10 mPa·s and 14 mPa·s. A viscosity of less than 10 mPa·s is not included in the above range. A viscosity exceeding 14 mPa·s is not included in the above range. The viscosity of the aqueous ink can be measured by, for example, a cone-plate rotational viscometer. The aqueous ink preferably has an evaporation rate of 70% or more when 5 g of the aqueous ink is placed in an upwardly opened container having a diameter of 60 mm and heated at 100°C for 4 hours indoors at a room temperature of 25°C and a humidity of 65%. The heating was performed by placing the container on the heater 39 and heating the container by the heater 39 such that a temperature in the container reached 100°C.

The water is preferably ion exchange water or pure water. A weight percent of the water in a total amount of the ink is in a range of 35.0 wt% to 62.0 wt%. The weight percent of the water may be, for example, a balance of the other components. The above range includes 35.0 wt% and 62.0 wt%. A weight percent of less than 35.0 wt% is not included in the above range. A weight percent exceeding 62.0 wt% is not included in the above range.

The solvent group A is added to adjust a decapping property and a drying property of the aqueous ink. The decapping property refers to a property that the nozzle is less likely to be clogged due to the aqueous ink attached to the nozzle. The drying property refers to ease of drying of the aqueous ink. The solvent group A is a solvent in which a result of a test according to a test method described in a measurement method of a volatile organic compound (VOC) content of an ink published by the Chinese government (standard number: GB/T38608-2020) satisfies a predetermined condition. Specifically, the solvent group A is a solvent having a weight change amount of the solvent in 30 minutes of more than 0.01 g when 1.5 g ± 0.1 g of the solvent is placed in an upwardly opened aluminum foil box of 40 mm × 40 mm × 10 mm and heated at 100°C ± 5°C indoors at a room temperature of 25°C and a humidity of 65%. The heating was performed by placing the aluminum foil box on the heater 39 and heating the aluminum foil box by the heater 39 such that a temperature in the aluminum foil box reached 100°C ± 5°C.

Examples of the solvent group A include tripropylene glycol (TPG) (vapor pressure: 0.7 Pa), propylene glycol (PG) (vapor pressure: 10.6 Pa), 1,5-pentanediol (vapor pressure: 0.52 Pa), 1,3-propylene glycol (4.5 Pa), 1,2-butanediol (vapor pressure: 10.0 Pa), 1,3-butanediol (vapor pressure: 8.0 Pa), 1,4-butanediol (vapor pressure: 1.0 Pa), and 3-methyl-1,5-pentanediol (MPD) (vapor pressure: 0.072 Pa). The solvent group A is a concept including one or more (for example, two) solvents among these solvents. A weight percent of the solvent group A in the total amount of the aqueous ink is in a range of 25.0 wt% to 30.0 wt%. The above range includes 25.0 wt% and 30.0 wt%. The reason for limiting the solvent group A to 30.0 wt% or less is to satisfy the VOC regulation standard. A weight percent of less than 25.0 wt% is not included in the above range. A weight percent exceeding 30.0 wt% is not included in the above range.

The binder polymer forms a film on the sheet S when the aqueous ink is dried. Examples of the binder polymer include an acrylic acid resin, a maleic acid ester resin, a vinyl acetate resin, a carbonate resin, a polycarbonate resin, a styrene resin, an ethylene resin, a polyethylene resin, a propylene resin, a polypropylene resin, a urethane resin, a polyurethane resin, a polyester resin, and a copolymer resin thereof, and an acrylic resin is preferred. In the present embodiment, the binder polymer is an acrylic polymer containing an acrylic acid as a monomer.

The acrylic polymer is available, for example, from a low viscosity binder polymer dispersion liquid (Mowinyl 6969D, manufactured by Japan Coating Resin Co., Ltd.) or a high viscosity binder polymer dispersion liquid (Mowinyl 6775, Mowinyl 6960, Mowinyl 6899D, RA-071B1, RA-071B2, manufactured by Japan Coating Resin Co., Ltd.). The low viscosity binder polymer dispersion liquid has a viscosity of 10 mPa·s or more and less than 100 mPa·s when an acrylic polymer is added to a low viscosity binder polymer dispersion medium such that the acrylic polymer is 38.0 wt% in the low viscosity binder polymer dispersion liquid. Hereinafter, the acrylic polymer added to the low viscosity binder polymer dispersion medium may be referred to as a low viscosity acrylic polymer for convenience. A weight percent of the low viscosity acrylic polymer in the total amount of the aqueous ink is preferably 5.0 wt% or less. More preferably, the weight percent of the low viscosity acrylic polymer in the total amount of the aqueous ink is 3.0 wt% or less.

The high viscosity binder polymer dispersion liquid has a viscosity of 100 mPa·s or more and less than 5000 mPa·s when an acrylic polymer is added to a high viscosity binder polymer dispersion medium such that the acrylic polymer is 38.0 wt% in the high viscosity binder polymer dispersion liquid. The viscosity of the high viscosity binder polymer dispersion liquid is preferably in a range of 2000 mPa·s to 5000 mPa·s. The above range includes 2000 mPa·s and 5000 mPa·s. A viscosity of less than 2000 mPa·s is not included in the above range. A viscosity exceeding 5000 mPa·s is not included in the above range. Hereinafter, the acrylic polymer added to the high viscosity binder polymer dispersion medium may be referred to as a high viscosity acrylic polymer for convenience. The high viscosity acrylic polymer is the same as the low viscosity acrylic polymer. The high viscosity acrylic polymer also serves as the thickener to be described later. In the present embodiment, the low viscosity acrylic polymer is used.

The thickener is added to increase the viscosity of the aqueous ink. The thickener is a liquid having a viscosity of 44 mPa·s or more when being mixed with water so as to be 80.0 wt%. The thickener contains the high viscosity binder polymer dispersion liquid and a solvent group B. The high viscosity binder polymer dispersion liquid contains the acrylic polymer, and thus also serves as the binder polymer. On the other hand, a low viscosity acrylic polymer dispersion liquid does not function as the thickener.

The solvent group B is a solvent in which a result of a test according to a test method described in a measurement method of a volatile organic compound (VOC) content of an ink published by the Chinese government (standard number: GB/T38608-2020) satisfies a predetermined condition. Specifically, the solvent group B is a solvent having a weight change amount of the solvent in 30 minutes of 0.01 g or less when 1.5 g ± 0.1 g of the solvent is placed in an upwardly opened aluminum foil box of 40 mm × 40 mm × 10 mm and heated at 100°C ± 5°C indoors at a room temperature of 25°C and a humidity of 65%.

In other words, the solvent group B is less likely to evaporate than the solvent group A. The heating was performed by placing the aluminum foil box on the heater 39 and heating the aluminum foil box by the heater 39 such that a temperature in the aluminum foil box reached 100°C ± 5°C. Examples of the solvent group B include glycerin (vapor pressure: 0.01 Pa) and diglycerin (vapor pressure: less than 0.01 Pa). The solvent group B is a concept including one or more (for example, one or two) solvents among these solvents. A weight percent of the thickener in the total amount of the aqueous ink is 10.1 wt% or more. The weight percent of the thickener in the total amount of the aqueous ink is preferably 28.0 wt% or less. A weight percent of the solvent group B in the total amount of the aqueous ink is preferably 25.0 wt% or less. More preferably, the weight percent of the solvent group B in the total amount of the aqueous ink is 5.0 wt% or less.

The coloring material is, for example, a pigment that can be dispersed in water by using a resin for pigment dispersion (resin dispersant). Examples of the coloring material include carbon black, an inorganic pigment, and an organic pigment. Examples of the carbon black include furnace black, lamp black, acetylene black, and channel black. Examples of the inorganic pigment include titanium oxide, an iron oxide inorganic pigment, and a carbon black inorganic pigment. Examples of the organic pigment include an azo pigment such as azo lake, an insoluble azo pigment, a condensed azo pigment, and a chelate azo pigment; a polycyclic pigment such as a phthalocyanine pigment, a perylene and perinone pigment, an anthraquinone pigment, a quinacridone pigment, a dioxazine pigment, a thioindigo pigment, an isoindolinone pigment, and a quinophthalone pigment; a dye lake pigment such as a basic dye lake pigment and an acid dye lake pigment; a nitro pigment; a nitroso pigment; and an aniline black daylight fluorescent pigment. The resin dispersant may be, for example, a general polymer dispersant (resin for pigment dispersion), or may be independently adjusted.

A weight percent of the coloring material in the total amount of the aqueous ink is not limited, and can be appropriately determined depending on, for example, a desired optical density or chroma. The weight percent of the coloring material is, for example, preferably in a range of 0.1 wt% or more and 20.0 wt% or less, and more preferably in a range of 1.0 wt% or more and 15.0 wt% or less. The weight percent of the coloring material is a weight of only the pigment, and does not include a weight of the binder polymer. The coloring material may be used alone or in combination of two or more thereof.

The surfactant may further contain a cationic surfactant, an anionic surfactant, or a nonionic surfactant. As these surfactants, for example, commercially available products may be used. Examples of the commercially available products include "Olfine (registered trademark) E1010", "Olfine (registered trademark) E1006", "Olfine (registered trademark) E1004", "Silface SAG 503A", and "Silface SAG 002", which are manufactured by Nissin Chemical Industry Co., Ltd. A weight percent of the surfactant in the total amount of the aqueous ink is, for example, 5.0 wt% or less, 3.0 wt% or less, or 0.1 wt% to 2.0 wt%.

The aqueous ink may further contain an additive known in the related art, as necessary. Examples of the additive include a pH adjusting agent, a viscosity adjusting agent, a surface tension adjusting agent, a preservative, an antifungal agent, a leveling agent, an antifoaming agent, a light stabilizer, an antioxidant, a nozzle drying inhibitor, a polymer component such as an emulsion, and a dye. Examples of the viscosity adjusting agent include polyvinyl alcohol, cellulose, and a water-soluble resin.

The aqueous ink can be prepared, for example, by uniformly mixing the water, the solvent group A, the binder polymer, the thickener, the coloring material, and the surfactant with other additives as necessary by a method known in the related art, and removing an insoluble matter by a filter or the like.

Hereinafter, a printing method will be described in which the controller 130 executes a process (image recording process) at the time of recording an image on the sheet S using the image recording device 100.

### [Image Recording Process]

When the controller 130 receives an instruction to record an image on the sheet S from the operation panel 44 or an external device such as an information processing device connected to the image recording device 100 via a LAN or the like, the controller 130 executes the image recording process. Specifically, the controller 130 drives the conveyance motor 53 to drive the holder 35, the conveyance roller 36A, and the conveyance roller 40A. Accordingly, the sheet S is pulled out from the roll body 37 and conveyed in the conveyance orientation 8A. When the sheet S reaches a position directly below the head 38, the controller 130 causes the aqueous ink to be ejected from the nozzles 38A (example of a first step). Accordingly, an image is recorded on the sheet S. The aqueous ink attached to the sheet S is dried by being heated when passing through the heater 39 (example of a second step). As a result, a film of the binder polymer is formed, and the aqueous ink is fixed to the sheet S. The sheet S passing through the heater 39 is further conveyed in the conveyance orientation 8A by the conveyance roller pair 40. After the recorded image is checked by the CIS 25, the sheet S conveyed in the conveyance orientation 8A by the conveyance roller pair 40 is cut to a predetermined size by the cutter unit 26 and discharged. After the sheet S is cut, the controller 130 returns a leading end of the sheet S to a position of the conveyance roller pair 36 by reversely rotating the conveyance motor 53. The controller 130 repeatedly executes the above process until the image to be recorded is recorded on the sheet S.

### [Purge Process]

On the other hand, during the image recording process, the controller 130 periodically executes a purge process (for example, when an image is recorded on 100 sheets S) (example of a third step). Specifically, first, as shown in FIG. 3, the controller 130 opens the purge shutoff valve 188 and the bypass valve 189 and closes the replenishing valve 187 and the atmospheric release valve 190 in a state where the cap 62 covers a nozzle surface 50. Next, the controller 130 drives the suction pump motor 58 to drive the suction pump 74. Accordingly, the aqueous ink in the nozzle 38A is suctioned, and the aqueous ink is discharged from the internal space 67 of the cap 62 to the waste liquid tank 77 through the discharge port 21 and the flow path 178.

### [Operations and Effects of Embodiment]

In the aqueous ink, the weight percent of the solvent group A in the total amount of the aqueous ink is 30.0 wt% or less, and thus the aqueous ink does not violate the VOC regulation standard. The weight percent of the solvent group A in the total amount of the aqueous ink is 25.0 wt% or more, and the weight percent of the water which is likely to evaporate than the solvent group A is small. Therefore, the aqueous ink attached to the nozzle 38A is reduced from drying quickly, and thus the aqueous ink is less likely to solidify. Accordingly, clogging of the nozzle 38A due to the solidified aqueous ink is reduced. That is, the decapping property is retained. The viscosity of the aqueous ink is adjusted to 10 mPa·s or more by the thickener, and thus, the image formed by the aqueous ink is less likely to become unclear. Therefore, ruggedness is retained. The viscosity of the aqueous ink is adjusted to 14 mPa·s or less by the thickener, and this reduces difficulty in ejecting the aqueous ink from the nozzle 38A. Therefore, an ejection property of the aqueous ink is retained.

In the aqueous ink, the weight percent of the solvent group B which is less likely to evaporate than the solvent group A is limited to 25.0 wt% or less, and thus, the drying property of the aqueous ink is high.

In the aqueous ink, the weight percent of the solvent group B in the total amount of the aqueous ink is limited to 5.0 wt% or less, and thus, the drying property of the aqueous ink is high.

In the aqueous ink, the binder polymer is a low viscosity acrylic polymer having a viscosity of 10 mPa·s to less than 100 mPa·s when being added to a low viscosity binder polymer dispersion medium so as to be 38.0 wt% in a low viscosity binder polymer dispersion liquid, and thus, rubbing resistance of the film formed by the binder polymer is high.

In the aqueous ink, the weight percent of the low viscosity acrylic polymer in the total amount of the aqueous ink is 5.0 wt% or less, and thus, when the aqueous ink is dried, formation of a film of the low viscosity acrylic polymer on the nozzle surface 50 or in the nozzle 38A is reduced. Therefore, an ejection failure of the aqueous ink is inhibited.

In the aqueous ink, the weight percent of the low viscosity acrylic polymer in the total amount of the aqueous ink is 3.0 wt% or less, and thus, when the aqueous ink is dried, the formation of the film of the low viscosity acrylic polymer on the nozzle surface 50 or in the nozzle 38A is reduced. Therefore, the ejection failure of the aqueous ink is further reduced.

In the aqueous ink, the binder polymer is an acrylic polymer, and thus, the film formed by the binder polymer has high rubbing resistance and stability.

The aqueous ink has a high drying property because the evaporation rate is 70% or more when 5 g of the aqueous ink is placed in the upwardly opened container having the diameter of 60 mm and heated at 100°C for 4 hours indoors at the room temperature of 25°C and the humidity of 65%.

In the image recording device 100 and the printing method, the aqueous ink attached to the sheet S is heated when passing through the heater 39, and thus, the aqueous ink attached to the sheet S is easily dried.

In the image recording device 100 and the printing method, a heating temperature by the heater 39 is 60°C or higher, and thus, the aqueous ink attached to the sheet S is easily dried.

In the image recording device 100 and the printing method, the viscosity of the aqueous ink is as high as 10 mPa·s or more. Therefore, even when a distance between the head 38 and the sheet S in the up-down direction 7 is increased and the aqueous ink is ejected downward from the nozzle 38A, the aqueous ink is less likely to spread on the sheet S, and thus, the image formed by the aqueous ink is less likely to become unclear. Therefore, a size restriction on a printing target is easily relazed by increasing the distance between the head 38 and the sheet S in the up-down direction 7.

In the image recording device 100 and the printing method, during the image recording process, the purge process of driving the suction pump 74 is periodically executed in a state where the cap 62 covers the nozzle 38A, and thus the nozzle 38A is less likely to be clogged by a foreign matter.

In the image recording device 100 and the printing method, the sheet S is conveyed by the conveyance roller pair 36 to a position where the sheet S faces the head 38 in the up-down direction 7, and thus the image is suitably recorded on the sheet S.

### [Modifications]

In the aqueous ink, the acrylic polymer in which a low viscosity binder polymer dispersion liquid containing the polymer has the viscosity of 10 mPa·s or more and less than 100 mPa·s when the polymer is added to a low viscosity binder polymer dispersion medium so as to be 38.0 wt% in the low viscosity binder polymer dispersion liquid is used, but the acrylic polymer in which a high viscosity binder polymer dispersion liquid containing the polymer has the viscosity of 100 mPa·s to 5000 mPa·s when the polymer is added to a high viscosity binder polymer dispersion medium so as to be 38.0 wt% in the high viscosity binder polymer dispersion liquid may be used. In this way, the film formed by the binder polymer has a higher rubbing resistance.

In the image recording device 100 and the printing method, the aqueous ink is ejected downward from the nozzle 38A, but the aqueous ink may be ejected in a horizontal direction from the nozzle 38A. In this case, the head 38 is disposed such that the nozzle surface 50 is oriented perpendicular to the horizontal direction. Even when the aqueous ink is ejected in the horizontal direction from the nozzle 38A, dripping of the aqueous ink attached to the sheet S is less likely to occur because the viscosity of the aqueous ink is as high as 10 mPa·s or more.

In the image recording device 100, the sheet S is the non-absorbing medium having the surface with low water absorbability, but may be an absorbing medium having a surface with high water absorbability. Examples of the absorbing medium include plain paper, glossy paper, and matte paper.

In the image recording device 100, the purge process is periodically executed during the image recording process, but the purge process may not be executed.

In the image recording device 100, the ink cartridge 34 and the preservation liquid cartridge 11 are separate and replaced with respect to the cartridge mounting portion 110, but the ink cartridge 34 and the preservation liquid cartridge 11 may be integrally formed and mounted on the cartridge mounting portion 110.

### Examples

Hereinafter, Examples of the present invention will be described.

### (Example 1)

An aqueous ink containing 39.1 wt% of pure water as water, 3.7 wt% of carbon black as a coloring material, 3.0 wt% of tripropylene glycol and 25.0 wt% of propylene glycol as a solvent group A, 5.0 wt% of a low viscosity acrylic polymer as a binder polymer, 21.5 wt% of glycerin as a solvent group B, 1.4 wt% of Olfine (registered trademark) E1004 (manufactured by Nissin Chemical Industry Co., Ltd.) as a surfactant, and 1.2 wt% of a pigment dispersant as another additive was used. A viscosity of the aqueous ink is 12.7 mPa·s at 25°C. The low viscosity acrylic polymer was obtained from a low viscosity acrylic polymer dispersion liquid (Mowinyl 6969D, manufactured by Japan Coating Resin Co., Ltd.).

### (Example 2)

The composition was the same as in Example 1 except that 53.8 wt% of pure water as water, 4.5 wt% of a high viscosity acrylic polymer as the binder polymer, and 11.9 wt% of a high viscosity binder polymer dispersion liquid (Mowinyl 6775 manufactured by Japan Coating Resin Co., Ltd.) as the thickener were contained, and the solvent group B was omitted. A viscosity of the aqueous ink was 11.6 mPa·s at 25°C. A weight percent of the high viscosity binder polymer dispersion liquid is a sum of 4.5 wt% of a high viscosity acrylic polymer and 7.4 wt% of a high viscosity acrylic polymer dispersion medium. In Table 1, the weight percent of the high viscosity acrylic polymer dispersion medium was shown in order to make it easy to understand that the total is 100 wt%.

### (Example 3)

The composition was the same as in Example 1 except that 51.2 wt% of pure water as the water and 9.5 wt% of glycerin as the solvent group B were used. A viscosity of the aqueous ink was 11.1 mPa·s at 25°C.

### (Example 4)

The composition was the same as in Example 1 except that 40.6 wt% of pure water as the water and 20.0 wt% of diglycerin as the solvent group B were used. A viscosity of the aqueous ink was 14.0 mPa·s at 25°C.

### (Example 5)

The composition was the same as in Example 1 except that 44.4 wt% of pure water as the water, 30.0 wt% of tripropylene glycol as the solvent group A, and 14.3 wt% of glycerin as the solvent group B were used. A viscosity of the aqueous ink was 13.6 mPa·s at 25°C.

### (Example 6)

The composition was the same as in Example 1 except that 36.6 wt% of pure water as the water, 30.0 wt% of propylene glycol as the solvent group A, and 22.0 wt% of glycerin as the solvent group B were used. A viscosity of the aqueous ink was 13.7 mPa·s at 25°C.

### (Example 7)

The composition was the same as in Example 1 except that 49.5 wt% of pure water as the water, 30.0 wt% of 1,5-pentanediol as the solvent group A, and 9.1 wt% of glycerin as the solvent group B were used. A viscosity of the aqueous ink was 13.2 mPa·s at 25°C.

### (Example 8)

The composition was the same as in Example 1 except that 43.4 wt% of pure water as the water, 25.0 wt% of tripropylene glycol as the solvent group A, and 20.3 wt% of glycerin as the solvent group B were used. A viscosity of the aqueous ink was 13.4 mPa·s at 25°C.

### (Example 9)

The composition was the same as in Example 1 except that 39.9 wt% of pure water as the water, 25.0 wt% of propylene glycol as the solvent group A, and 23.7 wt% of glycerin as the solvent group B were used. A viscosity of the aqueous ink was 11.5 mPa·s at 25°C.

### (Example 10)

The composition was the same as in Example 1 except that 41.6 wt% of pure water as the water, 25.0 wt% of 1,5-pentanediol as the solvent group A, and 22.0 wt% of glycerin as the solvent group B were used. A viscosity of the aqueous ink was 12.3 mPa·s at 25°C.

### (Example 11)

The composition was the same as in Example 1 except that 38.6 wt% of pure water as the water, 5.0 wt% of polyethylene as the binder polymer, 28.0 wt% of propylene glycol as the solvent group A, and 22.0 wt% of glycerin as the solvent group B were used. A viscosity of the aqueous ink was 11.1 mPa·s at 25°C.

### (Example 12)

The composition was the same as in Example 1 except that 36.6 wt% of pure water as the water, 30.0 wt% of 1,3-propylene glycol as the solvent group A, and 22.0 wt% of glycerin as the solvent group B were used. A viscosity of the aqueous ink was 12.2 mPa·s at 25°C.

### (Example 13)

The composition was the same as in Example 1 except that 43.6 wt% of pure water as the water, 25.0 wt% of 1,2-butanediol as the solvent group A, and 20.0 wt% of glycerin as the solvent group B were used. A viscosity of the aqueous ink was 10.6 mPa·s at 25°C.

### (Example 14)

The composition was the same as in Example 1 except that 45.6 wt% of pure water as the water, 25.0 wt% of 1,3-butanediol as the solvent group A, and 18.0 wt% of glycerin as the solvent group B were used. A viscosity of the aqueous ink was 10.0 mPa·s at 25°C.

### (Example 15)

The composition was the same as in Example 1 except that 43.6 wt% of pure water as the water, 25.0 wt% of 1,4-butanediol as the solvent group A, and 20.0 wt% of glycerin as the solvent group B were used. A viscosity of the aqueous ink was 10.1 mPa·s at 25°C.

### (Example 16)

The composition was the same as in Example 1 except that 46.6 wt% of pure water as the water, 25.0 wt% of 3-methyl-1,5-pentanediol as the solvent group A, and 17.0 wt% of glycerin as the solvent group B were used. A viscosity of the aqueous ink was 10.1 mPa·s at 25°C.

### (Example 17)

The composition was the same as in Example 1 except that 55.6 wt% of pure water as the water, 3.8 wt% of a high viscosity acrylic polymer as the binder polymer, and 10.1 wt% of a high viscosity binder polymer dispersion liquid as the thickener were contained, and the solvent group B was omitted. A viscosity of the aqueous ink was 10.1 mPa·s at 25°C. A weight percent of the high viscosity binder polymer dispersion liquid is a sum of 3.8 wt% of a high viscosity acrylic polymer and 6.3 wt% of a high viscosity acrylic polymer dispersion medium.

### (Example 18)

The composition was the same as in Example 1 except that 36.3 wt% of pure water as the water, 25.0 wt% of propylene glycol as the solvent group A, and 27.3 wt% of glycerin as the solvent group B were used. A viscosity of the aqueous ink was 14.0 mPa·s at 25°C.

### (Example 19)

The composition was the same as in Example 1 except that 37.4 wt% of pure water as the water and 23.2 wt% of glycerin as the solvent group B were used. A viscosity of the aqueous ink was 13.9 mPa·s at 25°C.

### (Example 20)

The composition was the same as in Example 1 except that 44.2 wt% of pure water as the water, 24.0 wt% of tripropylene glycol as the solvent group A, and 20.4 wt% of glycerin as the solvent group B were used. A viscosity of the aqueous ink was 12.8 mPa·s at 25°C.

### (Example 21)

The composition was the same as in Example 1 except that 51.5 wt% of pure water as the water, 3.0 wt% of a low viscosity acrylic polymer as the binder polymer, 30.0 wt% of 1,5-pentanediol as the solvent group A, and 9.1 wt% of glycerin as the solvent group B were used. A viscosity of the aqueous ink was 11.5 mPa·s at 25°C.

### (Example 22)

The composition was the same as in Example 1 except that 50.2 wt% of pure water as the water, 6.0 wt% of a low viscosity acrylic polymer as the binder polymer, and 9.5 wt% of glycerin as the solvent group B were used. A viscosity of the aqueous ink was 12.1 mPa·s at 25°C.

### (Example 23)

The composition was the same as in Example 1 except that 41.6 wt% of pure water as the water, 5.0 wt% of polyurethane as the binder polymer, 25.0 wt% of propylene glycol as the solvent group A, and 22.0 wt% of glycerin as the solvent group B were used. A viscosity of the aqueous ink was 11.1 mPa·s at 25°C.

### (Example 24)

The composition was the same as in Example 1 except that 42.6 wt% of pure water as the water, 5.0 wt% of polyurethane as the binder polymer, 25.0 wt% of propylene glycol as the solvent group A, and 20.0 wt% of glycerin and 1.0 wt% of diglycerin as the solvent group B were used. A viscosity of the aqueous ink was 11.0 mPa·s at 25°C.

### (Comparative Example 1)

The composition was the same as in Example 1 except that 36.6 wt% of pure water as the water and 24.1 wt% of glycerin as the solvent group B were used. A viscosity of the aqueous ink was 14.6 mPa·s at 25°C.

### (Comparative Example 2)

The composition was the same as in Comparative Example 1 except that 39.1 wt% of pure water as the water and 21.5 wt% of diglycerin as the solvent group B were used. A viscosity of the aqueous ink was 15.4 mPa·s at 25°C.

### (Comparative Example 3)

The composition was the same as in Comparative Example 1 except that 39.1 wt% of pure water as the water, 24.0 wt% of propylene glycol as the solvent group A, and 25.6 wt% of glycerin as the solvent group B were used. A viscosity of the aqueous ink was 12.3 mPa·s at 25°C.

### (Comparative Example 4)

The composition was the same as in Comparative Example 1 except that 52.0 wt% of pure water as the water, 2.5 wt% of a low viscosity acrylic polymer and 2.6 wt% of a high viscosity acrylic polymer as the binder polymer, 6.9 wt% of a high viscosity binder polymer dispersion liquid as the thickener, and 4.3 wt% of glycerin as the solvent group B were used. A viscosity of the aqueous ink was 12.0 mPa·s at 25°C. A weight percent of the high viscosity binder polymer dispersion liquid is a sum of 2.6 wt% of a high viscosity acrylic polymer and 4.3 wt% of a high viscosity acrylic polymer dispersion medium.

### (Comparative Example 5)

The composition was the same as in Comparative Example 1 except that 39.1 wt% of pure water as the water, and 3.0 wt% of tripropylene glycol, 25.0 wt% of propylene glycol, and 21.5 wt% of 1,5-pentanediol as the solvent group A were contained, and the solvent group B was omitted. A viscosity of the aqueous ink was 13.2 mPa·s at 25°C.

### (Comparative Example 6)

The composition was the same as in Comparative Example 1 except that 37.6 wt% of pure water as the water and 48.0 wt% of propylene glycol as the solvent group A were contained, and the solvent group B was omitted. A viscosity of the aqueous ink was 12.2 mPa·s at 25°C.

### (Comparative Example 7)

The composition was the same as in Comparative Example 1 except that 40.6 wt% of pure water as the water and 45.0 wt% of propylene glycol as the solvent group A were contained, and the solvent group B was omitted. A viscosity of the aqueous ink was 10.8 mPa·s at 25°C.

### (Comparative Example 8)

The composition was the same as in Comparative Example 1 except that 45.8 wt% of pure water as the water, 31.0 wt% of tripropylene glycol as the solvent group A, and 11.8 wt% of glycerin as the solvent group B were used. A viscosity of the aqueous ink was 12.7 mPa·s at 25°C.

### (Comparative Example 9)

The composition was the same as in Comparative Example 1 except that 38.1 wt% of pure water as the water, 31.0 wt% of propylene glycol as the solvent group A, and 19.6 wt% of glycerin as the solvent group B were used. A viscosity of the aqueous ink was 12.6 mPa·s at 25°C.

### (Comparative Example 10)

The composition was the same as in Comparative Example 1 except that 54.6 wt% of pure water as the water, 25.0 wt% of propylene glycol as the solvent group A, and 9.0 wt% of glycerin as the solvent group B were used. A viscosity of the aqueous ink was 9.5 mPa·s at 25°C.

### [Decapping Property Test]

After the head 38 was left for 30 minutes in a state where the nozzle surface 50 was not covered with the cap 62, it was visually determined whether printing on the sheet S could be performed by ejecting the aqueous ink from the nozzle 38A according to the following evaluation criteria. As the sheet S, a non-absorbing medium, for example, a resin film formed of polypropylene was used.
A: No pinhole or twisting was observed at all.
B: Some pinholes or twisting was observed.
C: Pinholes or twisting was observed.
D: Many pinholes or twisting was observed.

### [Ruggedness Test]

An image was recorded on the sheet S by ejecting the aqueous ink from the nozzle 38A, and an image quality was visually determined according to the following evaluation criteria. As the sheet S, a non-absorbing medium, for example, a resin film formed of polypropylene was used.
A: The image was sharp.
B: Part of the image was blurred.
C: The image was blurred overall.

### [First Ejection Property Test]

An image was recorded on 100 sheets S by ejecting the aqueous ink from the nozzle 38A, and an image quality was visually determined according to the following evaluation criteria. As the sheet S, a non-absorbing medium, for example, a resin film formed of polypropylene was used.
A: No pinhole or twisting was observed at all.
B: Some pinholes or twisting was observed.
C: Many pinholes or twisting was observed.

### [Drying Property Test]

The aqueous ink was ejected from the nozzle 38A at a resolution of 600 × 600 dpi and a liquid droplet amount of about 17 pL to cause the aqueous ink to attach to the sheet S, and then the aqueous ink was heated at about 60°C for 10 minutes by an infrared wire heater, and thereafter was visually determined according to the following evaluation criteria. As the sheet S, a non-absorbing medium, for example, a resin film formed of polypropylene was used.
A: There is no disorder when a coated film was rubbed with a finger.
B: There is no stickiness when the coated film was touched with a finger.
C: There is a stickiness when the coated film was touched with a finger.
D: There is a disorder when the coated film was touched with a finger.

### [Rubbing Resistance Test]

After the aqueous ink was ejected from the nozzle 38A to cause the aqueous ink to attach to the sheet S, the aqueous ink was heated at a temperature of 60°C for 10 minutes by the heater 39 to form a film of the binder polymer on the sheet S. The film was rubbed with a cotton swab and visually determined according to the following evaluation criteria.
A: No peeling of the film occurred at all.
B: Slight peeling of the film occurred.
C: Peeling of the film occurred.

### [Second Ejection Property Test]

After the aqueous ink was ejected from the nozzle 38A, the head 38 was left for 30 minutes in a state where the nozzle surface 50 was not covered with the cap 62, and thereafter an image was recorded on the sheet S by ejecting the aqueous ink from the nozzle 38A, and an image quality was visually determined according to the following evaluation criteria.
A: No pinhole or twisting was observed at all.
B: Some pinholes or twisting was observed.
C: Pinholes or twisting was observed.
D: Many pinhole or twisting was observed.

### [Decapping Property Test Results]

As shown in Tables 1 to 6, Examples 2 and 17 were evaluated as D, whereas Examples other than Examples 2 and 17 were evaluated as C or more, and it has been found that Examples other than Examples 2 and 17 had an excellent decapping property. It is considered that, while the weight percent of the solvent group A in Examples 2 and 17 was almost the same as the weight percent of the solvent group A in Examples other than Examples 2 and 17, in Examples 2 and 17, the solvent group B which is less likely to evaporate than the solvent group A was not contained, and thus the decapping property deteriorated. On the other hand, it is considered that the decapping property was retained in Examples other than Examples 2 and 17 because the solvent group B which is less likely to evaporate than the solvent group A was contained in Examples other than Examples 2 and 17.

In addition, Examples 3, 7, 21, and 22 were evaluated as C, whereas Examples 1, 4 to 6, 8 to 16, 18 to 20, 23, and 24 were evaluated as B or more, and it has been found that Examples 1, 4 to 6, 8 to 16, 18 to 20, 23, and 24 had an excellent decapping property. This is considered to be because the solvent group B which is less likely to evaporate than the solvent group A was contained in an amount of 10.0 wt% or more in Examples 1, 4 to 6, 8 to 16, 18 to 20, and 23, and the decapping property was further retained. On the other hand, this is considered to be because the weight percent of the solvent group B which is less likely to evaporate than the solvent group A was less than 10.0 wt% in Examples 3, 7, 21, and 22, and thus the weight percent of the pure water which is likely to evaporate than the solvent group A was increased.

### [Ruggedness Test Results]

As shown in Tables 1 to 6, Examples 1 to 24 were evaluated as B or more, whereas Comparative Example 10 was evaluated as C, and it has been found that Examples 1 to 24 had excellent ruggedness. In Examples 1 to 23, it is considered that the viscosity of the aqueous ink was as high as 10.0 mPa·s or more, and thus a substantially sharp image was obtained. On the other hand, in Comparative Example 10, it is considered that the viscosity of the aqueous ink was as low as 9.5 mPa·s, and thus the image was blurred overall.

### [First Ejection Property Test Results]

As shown in Tables 1 to 6, Examples 1 to 24 were evaluated as B or more, whereas Comparative Examples 1 and 2 were evaluated as C, and it has been found that Examples 1 to 24 had an excellent first ejection property. This is considered to be because the viscosity of the aqueous ink was as low as 14.0 mPa·s or less, and thus the aqueous ink was smoothly ejected from the nozzle 38A, in Examples 1 to 23. On the other hand, in Comparative Examples 1 and 2, this is considered to be because the viscosity of the aqueous ink exceeded 14.0 mPa·s, and thus the aqueous ink was not smoothly ejected from the nozzle 38A, and a predetermined amount of aqueous ink did not attach to the sheet S.

### [Drying Property Test Results]

As shown in Tables 1 to 6, Examples other than Example 18 were evaluated as C or more, whereas Example 18 and Comparative Example 3 were evaluated as D, and it has been found that Examples other than Example 18 had an excellent drying property. This is considered to be because the weight percent of the solvent group B which is less likely to evaporate than the solvent group A was limited to 25.0 wt% or less, in Examples other than Example 18. On the other hand, this is considered to be because the weight percent of the solvent group B which is less likely to evaporate than the solvent group A exceeded 25.0 wt%, in Example 18 and Comparative Example 3.

In addition, Examples 2, 7, 17, 21, and 22 were evaluated as B or more, whereas Examples 1, 4 to 6, 8 to 16, 18 to 20, 23, and 24 were evaluated as C or less, and it has been found that Examples 2, 7, 17, 21, and 22 had an excellent drying property. This is considered to be because the weight percent of the solvent group B which is less likely to evaporate than the solvent group A was limited to 10.0 wt% or less, in Examples 2, 7, 17, 21, and 22. On the other hand, this is considered to be because the weight percent of the solvent group B which is less likely to evaporate than the solvent group A exceeded 10.0 wt%, in Examples 1, 4 to 6, 8 to 16, 18 to 20, and 23.

In addition, Examples 2 and 17 and Comparative Example 4 were evaluated as A. This is considered to be because the weight percent of the solvent group B which is less likely to evaporate than the solvent group A was limited to 5.0 wt% or less, in Examples 2 and 17 and Comparative Example 4.

### [Rubbing Resistance Test]

As shown in Tables 1 to 6, Examples 2 and 17 were evaluated as A, whereas Examples other than Examples 2 and 17 were evaluated as B, and it has been found that films of Examples 2 and 17 had excellent rubbing resistance. This is considered to be because the high viscosity acrylic polymer was used as the binder polymer in Examples 2 and 17, whereas the low viscosity acrylic polymer was used as the binder polymer in Examples other than Examples 2 and 17.

### [Second Ejection Property Test]

As shown in Tables 1 to 6, Example 22 was evaluated as C, whereas Examples other than Example 22 were evaluated as B or more, and it has been found that Examples other than Example 22 had an excellent second ejection property. This is considered to be because the weight percent of the binder polymer was limited to 5.0 wt% or less in Examples other than Example 22, and thus when the aqueous ink was dried, formation of a film of the binder polymer on the nozzle surface 50 or in the nozzle 38A was reduced, in Examples other than Example 22. On the other hand, this is considered to be because the weight percent of the binder polymer exceeded 5.0 wt% in Example 22, and thus when the aqueous ink was dried, formation of a film of the binder polymer on the nozzle surface 50 or in the nozzle 38A was likely to occur in Example 22.

In addition, Example 21 was evaluated as A. This is considered to be because the weight percent of the binder polymer was limited to 3.0 wt% or less in Example 21, and thus when the aqueous ink was dried, formation of a film of the binder polymer on the nozzle surface 50 or in the nozzle 38A was further reduced, in Example 21.

**[Table 1]**

| | | Example 1 | Example 2 | Example 3 | Example 4 | Example 5 | Example 6 | Example 7 | Example 8 | Example 9 |
|---|---|---|---|---|---|---|---|---|---|---|
| Solvent group A (wt%) | TPG (vapor pressure: 0.7 Pa) | 3.0 | 3.0 | 3.0 | 3.0 | 30.0 | - | - | 25.0 | - |
| | PG (vapor pressure: 10.6 Pa) | 25.0 | 25.0 | 25.0 | 25.0 | - | 30.0 | - | - | 25.0 |
| | 1,5-pentanediol (vapor pressure: 0.52 Pa) | - | - | - | - | - | - | 30.0 | - | - |
| | 1,3-propylene glycol (vapor pressure: 4.5 Pa) | - | - | - | - | - | - | - | - | - |
| | 1,2-butanediol (vapor pressure: 10.0 Pa) | - | - | - | - | - | - | - | - | - |
| | 1,3-butanediol (vapor pressure: 8.0 Pa) | - | - | - | - | - | - | - | - | - |
| | 1,4-butanediol (vapor pressure: 1.0 Pa) | - | - | - | - | - | - | - | - | - |
| | MPD (vapor pressure: 0.072 Pa) | | | | | | | | | |
| Solvent group B (wt%) | Glycerin (vapor pressure: 0.01 Pa) | 21.5 | - | 9.5 | - | 14.3 | 22.0 | 9.1 | 20.3 | 23.7 |
| | Diglycerin (vapor pressure < 0.01 Pa) | - | - | - | 20.0 | - | - | - | - | - |
| Binder (wt%) | Low viscosity acrylic polymer | 5.0 | - | 5.0 | 5.0 | 5.0 | 5.0 | 5.0 | 5.0 | 5.0 |
| | High viscosity acrylic polymer | - | 4.5 | - | - | - | - | - | - | - |
| | Polyethylene | - | - | - | - | - | - | - | - | - |
| | Polyurethane | - | - | - | - | - | - | - | - | - |
| Binder dispersion medium (wt%) | High viscosity binder polymer dispersion medium | - | 7.4 | - | - | - | - | - | - | - |
| Coloring material (wt%) | Carbon black | 3.7 | 3.7 | 3.7 | 3.7 | 3.7 | 3.7 | 3.7 | 3.7 | 3.7 |
| Surfactant (wt%) | Olfine E1004 | 1.4 | 1.4 | 1.4 | 1.4 | 1.4 | 1.4 | 1.4 | 1.4 | 1.4 |
| Additive (wt%) | Pigment dispersant | 1.2 | 1.2 | 1.2 | 1.2 | 1.2 | 1.2 | 1.2 | 1.2 | 1.2 |
| Water (wt%) | Pure water | 39.1 | 53.8 | 51.2 | 40.6 | 44.4 | 36.6 | 49.5 | 43.4 | 39.9 |
| Viscosity (mPa·s) | | 12.7 | 11.6 | 11.1 | 14.0 | 13.6 | 13.7 | 13.2 | 13.4 | 11.5 |

**[Table 2]**

| | | Example 10 | Example 11 | Example 12 | Example 13 | Example 14 | Example 15 | Example 16 | Example 17 | Example 18 |
|---|---|---|---|---|---|---|---|---|---|---|
| Solvent group A (wt%) | TPG (vapor pressure: 0.7 Pa) | - | - | - | - | - | - | - | 3.0 | - |
| | PG (vapor pressure: 10.6 Pa) | - | 28.0 | - | - | - | - | - | 25.0 | 25.0 |
| | 1,5-pentanediol (vapor pressure: 0.52 Pa) | 25.0 | - | - | - | - | - | - | - | - |
| | 1,3-propylene glycol (vapor pressure: 4.5 Pa) | - | - | 30.0 | - | - | - | - | - | - |
| | 1,2-butanediol (vapor pressure: 10.0 Pa) | - | - | - | 25.0 | - | - | - | - | - |
| | 1,3-butanediol (vapor pressure: 8.0 Pa) | - | - | - | - | 25.0 | - | - | - | - |
| | 1,4-butanediol (vapor pressure: 1.0 Pa) | - | - | - | - | - | 25.0 | - | - | - |
| | MPD (vapor pressure: 0.072 Pa) | - | - | - | - | - | - | 25.0 | - | - |
| Solvent group B (wt%) | Glycerin (vapor pressure: 0.01 Pa) | 22.0 | 22.0 | 22.0 | 20.0 | 18.0 | 20.0 | 17.0 | - | 27.3 |
| | Diglycerin (vapor pressure < 0.01 Pa) | | | | | | | | | |
| Binder (wt%) | Low viscosity acrylic polymer | 5.0 | - | 5.0 | 5.0 | 5.0 | 5.0 | 5.0 | - | 5.0 |
| | High viscosity acrylic polymer | - | - | - | - | - | - | - | 3.8 | - |
| | Polyethylene | - | 5.0 | - | - | - | - | - | - | - |
| | Polyurethane | - | - | - | - | - | - | - | - | - |
| Binder dispersion medium (wt%) | High viscosity binder polymer dispersion medium | - | - | - | - | - | - | - | 6.3 | - |
| Coloring material (wt%) | Carbon black | 3.7 | 3.7 | 3.7 | 3.7 | 3.7 | 3.7 | 3.7 | 3.7 | 3.7 |
| Surfactant (wt%) | Olfine E1004 | 1.4 | 1.4 | 1.4 | 1.4 | 1.4 | 1.4 | 1.4 | 1.4 | 1.4 |
| Additive (wt%) | Pigment dispersant | 1.2 | 1.2 | 1.2 | 1.2 | 1.2 | 1.2 | 1.2 | 1.2 | 1.2 |
| Water (wt%) | Pure water | 41.6 | 38.6 | 36.6 | 436 | 45.6 | 43.6 | 46.6 | 55.6 | 36.3 |
| Viscosity (mPa·s) | | 12.3 | 13.1 | 12.2 | 10.6 | 10.0 | 10.1 | 10.1 | 10.1 | 14.0 |

**[Table 3]**

| | | Example 19 | Example 20 | Example 21 | Example 22 | Example 23 | Example 24 | Comparative Example 1 | Comparative Example 2 |
|---|---|---|---|---|---|---|---|---|---|
| Solvent group A (wt%) | TPG (vapor pressure: 0.7 Pa) | 3.0 | 24.0 | - | 3.0 | - | | 3.0 | 3.0 |
| | PG (vapor pressure: 10.6 Pa) | 25.0 | - | - | 25.0 | 25.0 | 25.0 | 25.0 | 25.0 |
| | 1,5-pentanediol (vapor pressure: 0.52 Pa) | - | - | 30.0 | - | - | | - | - |
| | 1,3-propylene glycol (vapor pressure: 4.5 Pa) | - | - | - | - | - | | - | - |
| | 1,2-butanediol (vapor pressure: 10.0 Pa) | - | - | - | - | - | | - | - |
| | 1,3-butanediol (vapor pressure: 8.0 Pa) | - | - | - | - | - | | - | - |
| | 1,4-butanediol (vapor pressure: 1.0 Pa) | - | - | - | - | - | | - | - |
| | MPD (vapor pressure: 0.072 Pa) | | | | | | | | |
| Solvent group B (wt%) | Glycerin (vapor pressure: 0.01 Pa) | 23.2 | 20.4 | 9.1 | 9.5 | 22.0 | 20.0 | 24.1 | - |
| | Diglycerin (vapor pressure < 0.01 Pa) | - | - | - | - | - | 1.0 | - | 21.5 |
| Binder (wt%) | Low viscosity acrylic polymer | 5.0 | 5.0 | 3.0 | 6.0 | - | | 5.0 | 5.0 |
| | High viscosity acrylic polymer | - | - | - | - | - | | - | - |
| | Polyethylene | - | - | - | - | - | | - | - |
| | Polyurethane | - | - | - | - | 5.0 | 5.0 | - | - |
| Binder dispersion medium (wt%) | High viscosity binder polymer dispersion medium | - | - | - | - | | | - | - |
| Coloring material (wt%) | Carbon black | 3.7 | 3.7 | 3.7 | 3.7 | 3.7 | 3.7 | 3.7 | 3.7 |
| Surfactant (wt%) | Olfine E1004 | 1.4 | 1.4 | 1.4 | 1.4 | 1.4 | | 1.4 | 1.4 |
| Additive (wt%) | Pigment dispersant | 1.2 | 1.2 | 1.2 | 1.2 | 1.2 | 1.2 | 1.2 | 1.2 |
| Water (wt%) | Pure water | 37.4 | 44.2 | 51.5 | 50.2 | 41.6 | 42.6 | 36.6 | 39.1 |
| Viscosity (mPa·s) | | 13.9 | 12.8 | 11.5 | 12.1 | 11.1 | 11.0 | 14.6 | 15.4 |

**[Table 4]**

| | | Comparative Example 3 | Comparative Example 4 | Comparative Example 5 | Comparative Example 6 | Comparative Example 7 | Comparative Example 8 | Comparative Example 9 | Comparative Example 10 |
|---|---|---|---|---|---|---|---|---|---|
| Solvent group A (wt%) | TPG (vapor pressure: 0.7 Pa) | - | 3.0 | 3.0 | 3.0 | 3.0 | 31.0 | - | - |
| | PG (vapor pressure: 10.6 Pa) | 24.0 | 25.0 | 25.0 | 48.0 | 45.0 | - | 31.0 | 25.0 |
| | 1,5-pentanediol (vapor pressure: 0.52 Pa) | - | - | 21.5 | - | - | - | - | - |
| | 1,3-propylene glycol (vapor pressure: 4.5 Pa) | - | - | - | - | - | - | - | - |
| | 1,2-butanediol (vapor pressure: 10.0 Pa) | - | - | - | - | - | - | - | - |
| | 1,3-butanediol (vapor pressure: 8.0 Pa) | - | - | - | - | - | - | - | - |
| | 1,4-butanediol (vapor pressure: 1.0 Pa) | - | - | - | - | - | - | - | - |
| | MPD (vapor pressure: 0.072 Pa) | - | - | - | - | - | - | - | - |
| Solvent group B (wt%) | Glycerin (vapor pressure: 0.01 Pa) | 25.6 | 4.3 | - | - | - | 11.8 | 19.6 | 9.0 |
| | Diglycerin (vapor pressure < 0.01 Pa) | - | - | - | - | - | - | - | - |
| Binder (wt%) | Low viscosity acrylic polymer | 5.0 | 2.5 | 5.0 | 5.0 | 5.0 | 5.0 | 5.0 | 5.0 |
| | High viscosity acrylic polymer | - | 2.6 | - | - | - | - | - | - |
| | Polyethylene | - | - | - | - | - | - | - | - |
| | Polyurethane | - | - | - | - | - | - | - | - |
| Binder dispersion medium (wt%) | High viscosity binder polymer dispersion medium | - | 4.3 | - | - | - | - | - | - |
| Coloring material (wt%) | Carbon black | 3.7 | 3.7 | 3.7 | 3.7 | 3.7 | 3.7 | 3.7 | 3.7 |
| Surfactant (wt%) | Olfine E1004 | 1.4 | 1.4 | 1.4 | 1.4 | 1.4 | 1.4 | 1.4 | 1.4 |
| Additive (wt%) | Pigment dispersant | 1.2 | 1.2 | 1.2 | 1.2 | 1.2 | 1.2 | 1.2 | 1.2 |
| Water (wt%) | Pure water | 39.1 | 52.0 | 39.1 | 37.6 | 40.6 | 45.8 | 38.1 | 54.6 |
| Viscosity (mPa·s) | | 12.3 | 12.0 | 13.2 | 12.2 | 10.8 | 12.7 | 12.6 | 9.5 |

**[Table 5]**

| Evaluation item | Example 1 | Example 2 | Example 3 | Example 4 | Example 5 | Example 6 | Example 7 | Example 8 | Example 9 |
|---|---|---|---|---|---|---|---|---|---|
| Decapping property | B | D | C | B | B | B | C | B | B |
| Drying property | C | A | B | C | C | C | B | C | C |
| Ruggedness | A | A | A | A | A | A | A | A | A |
| First ejection property | A | A | A | B | B | B | B | B | A |
| Rubbing resistance | B | A | B | B | B | B | B | B | B |
| Second ejection property | B | B | B | B | B | B | B | B | B |

| Evaluation item | Example 10 | Example 11 | Example 12 | Example 13 | Example 14 | Example 15 | Example 16 | Example 17 | Example 18 |
|---|---|---|---|---|---|---|---|---|---|
| Decapping property | B | B | B | B | B | B | B | D | A |
| Drying property | C | C | C | C | C | C | C | A | D |
| Ruggedness | A | A | A | B | B | B | B | B | A |
| First ejection property | A | B | A | A | A | A | A | A | B |
| Rubbing resistance | B | B | B | B | B | B | B | ⊚ | B |
| Second ejection property | B | B | B | B | B | B | B | B | B |

**[Table 6]**

| Evaluation item | Example 19 | Example 20 | Example 21 | Example 22 | Example 23 | Example 24 | Comparative Example 1 | Comparative Example 2 |
|---|---|---|---|---|---|---|---|---|
| Decapping property | B | B | C | C | B | B | B | B |
| Drying property | C | C | B | B | C | C | C | C |
| Ruggedness | A | A | A | A | A | A | A | A |
| First ejection property | B | A | B | A | A | A | C | C |
| Rubbing resistance | B | B | B | B | B | B | B | B |
| Second ejection property | B | B | A | C | B | B | B | B |

| Evaluation item | Comparative Example 3 | Comparative Example 4 | Comparative Example 5 | Comparative Example 6 | Comparative Example 7 | Comparative Example 8 | Comparative Example 9 | Comparative Example 10 |
|---|---|---|---|---|---|---|---|---|
| Decapping property | A | D | D | D | D | B | B | C |
| Drying property | D | A | B | B | B | D | D | B |
| Ruggedness | A | A | A | A | A | A | A | C |
| First ejection property | A | A | B | A | A | A | A | B |
| Rubbing resistance | B | A | B | B | B | B | B | B |
| Second ejection property | B | C | B | B | B | B | B | B |

### REFERENCE SIGNS LIST

36: conveyance roller pair (conveyance device)
38: head
38A: nozzle
39: heater (heating device)
62: cap
74: suction pump
100: image recording device (ink ejection device)
130: controller
S: sheet (non-absorbing medium)

## Claims

1. An aqueous ink, comprising:
water;
a solvent group A having a weight change amount of more than 0.01 g when 1.5 g ± 0.1 g of the solvent group A is placed in an upwardly opened aluminum foil box of 40 mm × 40 mm × 10 mm and heated at a temperature of 100°C ± 5°C for 30 minutes indoors at a room temperature of 25°C and a humidity of 65%;
a thickener; and
a binder polymer,
wherein a weight percent of the solvent group A in the total amount of the aqueous ink is 25.0 wt% to 30.0 wt%,
wherein a weight percent of the thickener in the total amount of the aqueous ink is 10.1 wt% or more, and
wherein a viscosity is 10 mPa·s to 14 mPa·s.

2. The aqueous ink according to claim 1,
wherein the thickener contains a solvent group B having a weight change amount of 0.01 g or less when 1.5 g ± 0.1 g of the solvent group B is placed in an upwardly opened aluminum foil box of 40 mm × 40 mm × 10 mm and heated at a temperature of 100°C ± 5°C for 30 minutes indoors at a room temperature of 25°C and a humidity of 65%, and
wherein a weight percent of the solvent group B in the total amount of the aqueous ink is 25.0 wt% or less.

3. The aqueous ink according to claim 2,
wherein the weight percent of the solvent group B in the total amount of the aqueous ink is 5.0 wt% or less.

4. The aqueous ink according to claim 1,
wherein the binder polymer is a polymer in which a low viscosity binder polymer dispersion liquid containing the polymer has a viscosity of 10 mPa·s to less than 100 mPa·s when the polymer is added to a low viscosity binder polymer dispersion medium so as to be 38.0 wt% in the low viscosity binder polymer dispersion liquid.

5. The aqueous ink according to claim 4,
wherein a weight percent of the binder polymer in the total amount of the aqueous ink is 5.0 wt% or less.

6. The aqueous ink according to claim 5,
wherein the weight percent of the binder polymer in the total amount of the aqueous ink is 3.0 wt% or less.

7. The aqueous ink according to claim 6,
wherein the binder polymer is an acrylic polymer.

8. The aqueous ink according to claim 1,
wherein the thickener contains a high viscosity binder polymer dispersion liquid in which the binder polymer is dispersed, and
wherein the high viscosity binder polymer dispersion liquid has a viscosity of 100 mPa·s or more and less than 5000 mPa·s when the binder polymer is added to a high viscosity binder polymer dispersion medium such that the binder polymer is 38.0 wt% in the high viscosity binder polymer dispersion liquid.

9. The aqueous ink according to claim 1,
wherein the weight percent of the thickener in the total amount of the aqueous ink is 28.0 wt% or less.

10. The aqueous ink according to claim 3,
wherein an evaporation rate after 5 g of the aqueous ink is placed in an upwardly opened container having a diameter of 60 mm and heated at 100°C for 4 hours indoors at a room temperature of 25°C and a humidity of 65%, is 70% or more.

11. An ink ejection device, comprising:
a head including a nozzle configured to eject the aqueous ink according to any one of claims 1 to 10; and
a heater configured to heat at least one of a non-absorbing medium to which the aqueous ink ejected from the nozzle is attached and the aqueous ink attached to the non-absorbing medium.

12. The ink ejection device according to claim 11,
wherein a heating temperature by the heater is 60°C or higher.

13. The ink ejection device according to claim 11,
wherein the nozzle is configured to eject the ink in a vertical direction.

14. The ink ejection device according to claim 11,
wherein the nozzle is configured to eject the ink in a horizontal direction.

15. The ink ejection device according to claim 11, further comprising:
a cap configured to abut against the head and cover the nozzle;
a suction pump configured to suction an ink in the cap; and
a controller,
wherein the controller is configured to periodically perform a purge process of driving the suction pump in a state where the cap covers the nozzle during an image recording process of ejecting the ink onto the non-absorbing medium.

16. An image recording device, comprising:
the ink ejection device according to any one of claims 11 to 15; and
a conveyor configured to convey a non-absorbing medium in a conveyance direction.

17. A printing method, comprising:
a first step of ejecting the aqueous ink according to any one of claims 1 to 10 from a nozzle; and
a second step of heating, by a heater, at least one of a non-absorbing medium to which the aqueous ink ejected from the nozzle is attached and the aqueous ink attached to the non-absorbing medium.

18. The printing method according to claim 17,
wherein, in the second step, a temperature at which the heater heats at least one of the non-absorbing medium and the aqueous ink is 60°C or higher.

19. The printing method according to claim 18,
wherein, in the first step, the nozzle ejects the aqueous ink in a vertical direction.

20. The printing method according to claim 18,
wherein, in the first step, the nozzle ejects the aqueous ink in a horizontal direction.

21. The printing method according to claim 17, further comprising:
a third step of periodically performing, by a controller, a purge process of driving a suction pump configured to suction an ink in a cap in a state where the cap covers the nozzle during an image recording process of recording an image on the non-absorbing medium by ejecting the aqueous ink from the nozzle.

22. The printing method according to claim 21, further comprising:
a fourth step of conveying, by a conveyor, the non-absorbing medium to a position where non-absorbing medium faces a head including the nozzle before the first step.
